# DEMANDE DE BREVET EUROPEEN

(11) **EP 1 967 940 A1**
(43) Date de publication de la demande: **10.09.2008**
(21) Numéro de dépôt: 08290209.9
(22) Date de dépôt: 04.03.2008
(51) Int. Cl.: G06F 1/26

(54) **Dispositif pour alimenter un appareil électronique portable par combinaison de ports d'entrée/sortie d'au moins un autre équipement électroniqe, système, procédé et applications associés**

(30) Priorité: 09.03.2007 FR 0701726
(71) Demandeur: Archos, 91430 Igny (FR)
(72) Inventeur: Gilbert, Jérôme, 92300 Levallois Perret (FR)

(57) **Abrégé**

Dispositif 42 pour combiner les puissances issues d'une pluralité de ports d'entrée/sortie. Utilisation pour alimenter des appareils électroniques 41 pouvant nécessiter davantage d'énergie que ne peut en délivrer un seul port d'entrée sortie, par exemple pour charger plus rapidement les moyens de stockage d'énergie embarqués dans l'appareil électronique portable raccordé au dispositif.

## Description

La présente invention concerne un dispositif pour alimenter un appareil électronique portable à partir d'un équipement électronique disposant d'une pluralité de ports d'entrée/sortie incluant chacun une alimentation pour des dispositifs externes. Généralement le courant fourni par chaque port d'entrée/sortie pour alimenter un dispositif externe est limité par des dispositifs internes à l'équipement conformément aux prescriptions de la spécification du standard définissant les caractéristiques dudit port.

Le problème auquel il s'agit de proposer une réponse concerne le cas où l'appareil externe à alimenter nécessite une puissance supérieure à la puissance maximum pouvant être fournie par ledit port d'entrée/sortie.

On connait des solutions telles que décrites dans le brevet US7,114,085 pour gérer les pointes de demandes au sein de l'appareil électronique portable.

Cette solution convient lorsque les besoins de dépassement de la puissance maximum disponible sont intermittents. On connait des solutions d'alimentation de périphériques informatiques qui complètent la puissance disponible sur le port d'entrée/sortie auquel ils sont raccordés par une alimentation auxiliaire. Dans le cas de certains appareils périphériques informatiques qui ont des besoins peu fréquents de puissance qui excèdent les capacités du port auquel ils sont raccordés, des solutions de stockage d'énergie intermédiaires, par exemple dans des super-condensateurs, sont couramment employées pour lisser les pointes de courant en restant dans les limites des spécifications du port.

Les solutions à l'état de l'art n'apportent qu'une réponse partielle et insatisfaisante au problème en ne permettant la fourniture d'une puissance continûment supérieure à celle que peut fournir un port d'entrée/sortie qu'au prix d'une alimentation auxiliaire supplémentaire.

L'invention vise à rendre possible l'alimentation d'un appareil électronique portable par au moins un équipement électronique disposant d'une plus grande capacité énergétique. Ledit appareil électronique portable n'étant relié à un ou plusieurs autres équipements électroniques que par l'intermédiaire de connexions à des bus d'entrée/sortie standards.

Chacun desdits équipements électroniques pouvant être raccordés à une source d'énergie externe comme un réseau d'alimentation électrique et/ou être eux-mêmes des équipements portables fonctionnant à partir d'une source d'énergie interne.

L'alimentation d'un appareil électronique portable par une source extérieure peut être rendu nécessaire pour permettre un fonctionnement continu sans solliciter ses propres ressources énergétiques embarquées. Il peut s'agir aussi d'alimenter l'appareil portable pour recharger d'éventuels moyens d'alimentation interne rechargeables. Il peut s'agir également à la fois, d'alimenter l'appareil électronique portable pour qu'il fournisse le service attendu et de charger ses éventuels moyens de stockage d'énergie rechargeables embarqués.

Le but de l'invention est de proposer une solution pour alimenter au moins un appareil électronique portable à partir d'interfaces standards disponibles en nombre sur de plus en plus d'équipements électroniques grand publics ou professionnels à l'aire de la convergence numérique. De tels équipements sont par exemple des ordinateurs portables ou fixes, des téléviseurs numériques, des enregistreurs numériques, etc.

Des moyens de raccordement pouvant être connectés à des ports d'entrée/sortie standards sur au moins un équipement électronique, constituent des sources d'alimentation unitaires combinables dans le dispositif selon l'invention. Le nombre des connexions unitaires n'est pas limité sur le plan théorique mais uniquement sur le plan pratique par des considérations de coût de mise en oeuvre et d'utilité. Les ports d'entrée/sortie intéressants au sens de l'invention sont ceux qui offrent une source d'alimentation aux périphériques qui leur sont connectés. Lesdits ports d'entrée/sortie intéressants sont par exemple au moment de la rédaction de ce texte, les ports USB1.1, USB2.0, Firewire (IEEE1394) à 6 ou 9 broches (la version à 4 broches ne fournissant pas d'alimentation). Bien entendu le développement de nouveaux standards de ports d'entrée/sortie est un processus continu d'amélioration des débits et de l'universalité. On ne sort pas du cadre de l'invention en utilisant d'autres ports d'entrée/sortie présents ou futurs que ceux qui ne sont indiqués qu'à titre d'exemple non-limitatif.

Dans les figures qui illustrent l'invention, les connexions aux ports d'entrée/sortie sont représentées par un câble équipé d'un connecteur mâle.

Bien entendu cela ne constitue en rien une limitation de l'invention. La connexion aux ports d'entrée/sortie peut reposer sur l'utilisation de connecteurs mâles ou femelles, solidaires du dispositif ou de câbles de liaison détachables aux deux extrémités. Il peut s'agir également de toute combinaison d'au moins un câble solidaire du dispositif et d'au moins une prise nécessitant un câble de liaison détachable. Les connecteurs mâles et/ou femelles pouvant en tout ou partie être indifféremment placés à l'extrémité d'un câble ou solidaires d'une paroi du dispositif selon l'invention. Ce dispositif peut être mis en oeuvre par exemple sous la forme d'un accessoire « pieuvre » raccordé en permanence ou raccordable par une pluralité de câbles. Le dispositif peut aussi être mis en oeuvre sous la forme d'un bloc rigide connectable directement audit appareil électronique portable pour former un ensemble compact. Le dispositif peut également être fonctionnellement intégré dans une station d'accueil capable de recevoir ledit appareil électronique portable. La station d'accueil peut en outre offrir d'autres fonctions en complément des moyens pour mettre en oeuvre une alimentation selon l'invention.

Pour plus de clarté dans la description, le dispositif selon l'invention est illustré sous la forme d'un bloc fonctionnel indépendant placé entre au moins un équipement électronique source d'énergie et au moins un appareil électronique portable à alimenter. On ne sort pas du cadre de l'invention si le dispositif est intégré à l'un ou l'autre des composants du système ainsi formé.

Le choix d'un ensemble de ports d'entrée/sortie de même type ou de type analogue, c'est-à-dire ayant des caractéristiques identiques en ce qui concerne l'alimentation fournie, tels que par exemple des ports USB quelle qu'en soit la version, n'est pas une limitation de l'invention mais il simplifie la combinaison des sources d'alimentation. En effet lorsque les tensions nominales sont identiques, ainsi que les courants maximums pouvant être fournis à des charges externes, alors la combinaison des puissances unitaires pourrait se faire théoriquement par une simple mise en parallèle des contributeurs individuels. Néanmoins, une combinaison aussi simple ne fonctionne de manière certaine et fiable que dans le cas de ports alimentés en amont par le même bus interne dudit équipement électronique, et pour lesquels les moyens utilisés pour limiter le courant pour chaque port repose sur des solutions semi-passives telles que des résistances à coefficient de température positif, par exemple des « Polyswitch » (marque déposée). Lorsqu'il peut y avoir des différences de tensions, en particulier dans le cas de la combinaison d'alimentations issues de ports d'entrée/sortie appartenant à des équipements différents et/ou lorsque les moyens de limitation de courant utilisent des semi-conducteurs, alors le dispositif incorporera avantageusement des moyens pour empêcher la circulation de courants entre les sorties d'alimentation des ports d'entrée/sortie ainsi combinées. Dans certains cas de mise en oeuvre il peut être avantageux d'ajouter une résistance en série dans chaque branche, si possible de la plus faible valeur possible, pour équilibrer les courants. Dans la plupart des cas la résistance série des câbles de liaison à laquelle s'ajoute celle des dispositifs de limitation de courant amont est suffisante pour assurer le bon fonctionnement du dispositif sans résistance série en amont des moyens pour empêcher des courants de circuler entre les branches. De tels moyens peuvent être de simples diodes, des semi-conducteurs ou des blocs fonctionnels à semi-conducteurs plus sophistiqués. Au moins une branche peut en outre comprendre des moyens actifs pour limiter et/ou réguler le courant ou la tension et/ou convertir la tension en élévation ou en abaissement, par exemple, harmoniser les caractéristiques des contributions unitaires avant combinaison. Les composants à travers lesquels passent les puissances à combiner seront avantageusement choisis parmi ceux caractérisés par une chute de tension directe de l'élément série la plus faible possible, comme par exemple des diodes de type Schottky. Ceci pour ne pas dégrader les rendements énergétiques et pour en outre, lorsque cette caractéristique est avantageuse, conserver quasiment à l'identique la tension nominale fournie par le ou par les équipements électroniques raccordés jusqu'à l'appareil électronique portable à alimenter.

L'alimentation de l'appareil portable par le dispositif selon l'invention peut se faire par continuité de liaisons électriques déconnectables ou non, l'énergie peut également être transférée par induction à travers des parois.

Le dispositif selon l'invention peut en outre être agencé pour fournir à l'appareil électronique raccordé une information représentative de la puissance combinée maximale pouvant être fournie. Cette information est obtenue par exemple par la détection de la présence effective de chaque contributeur unitaire potentiel. L'information peut être fournie à l'appareil portable à alimenter de nombreuses manières. Par exemple l'information peut être fournie par des moyens séparés de ceux fournissant l'alimentation.

L'information peut aussi être fournie par des moyens combinés avec ceux fournissant l'alimentation, par exemple par des contacts différents au sein d'un même connecteur. Ces contacts plus ou moins nombreux selon que l'on met en oeuvre des moyens de transmission série ou parallèle ou encore que l'on utilise la variation d'un paramètre électrique tel qu'une valeur de résistance, une tension, un courant, une fréquence, un rapport cyclique, une largeur d'impulsion etc. Dans un mode de réalisation particulièrement simple au niveau du dispositif, on se limite à assurer la continuité entre les circuits de détection de l'état des contributeurs unitaires et l'appareil à alimenter, ce dernier assurant l'ensemble des traitements à partir de l'information brute.

Il est également possible pour le dispositif selon l'invention de fournir l'énergie et l'information par des moyens combinés utilisant les mêmes circuits au sein du même connecteur que celui dédié à l'alimentation. Il s'agit dans ce cas de moduler directement ou encore de superposer un signal modulé ou non à l'alimentation. Lorsque des inducteurs sont utilisés pour transmettre l'énergie à travers les parois et sans connecteurs entre le dispositif selon l'invention et l'appareil portable, il est avantageux d'utiliser tout ou partie des mêmes moyens pour transmettre l'information. Il peut s'agir par exemple de faire varier la fréquence du courant dans l'inducteur en fonction de l'information au sein du dispositif d'alimentation. L'appareil portable compatible mesurant la fréquence du courant induit peut ainsi aisément récupérer l'information

Le dispositif selon l'invention pour alimenter un appareil électronique portable par combinaison d'une pluralité d'alimentations unitaires issues de ports d'entrée/sortie d'au moins un autre équipement électronique, agencé pour fournir en outre une information représentative de la puissance maximale pouvant être fournie sans que les dites alimentations unitaires ne dépassent leur puissance maximale spécifiée ; ainsi
qu'un appareil électronique portable capable d'interpréter tout ou partie de ladite information fournie par le dispositif qui l'alimente pour adapter la puissance qu'il absorbe pour ne pas dépasser la puissance maximale combinée pouvant être fournie, forment un système pour adapter la puissance absorbée par un appareil électronique portable en fonction de la puissance maximale que peut fournir un dispositif qui l'alimente par combinaison d'une pluralité de connexions à des ports d'entrée/sortie.

Ce système peut comprendre en outre des moyens pour adapter les conditions de recharge d'au moins un accumulateur d'énergie lié à l'appareil électronique portable en fonction de ladite information.

Il est à noter que dans le cas de ports d'entrée/sortie fournissant une tension d'alimentation stabilisée à une valeur spécifiée, comme par exemple 5V pour le standard USB, les propos qui précèdent et qui suivent concernant les puissances peuvent être avantageusement transposés en utilisant les courants correspondants en tant que seule grandeur physique variable constitutive de la puissance.

L'adaptation de la puissance absorbée par un appareil électronique portable en fonction de la puissance maximale que peut fournir un dispositif qui l'alimente par combinaison d'une pluralité de connexions à des ports d'entrée/sortie repose sur un procédé comprenant les étapes suivantes:
- Une détection directe ou indirecte des puissances unitaires maximales combinables selon l'invention,
- La transmission à l'appareil à alimenter d'une information en relation avec la détection de la première étape,
- L'adaptation, au sein de l'appareil portable alimenté, de la puissance maximale absorbée en fonction de ladite information.

Un application particulièrement avantageuse du procédé d'adaptation de la puissance absorbée par un appareil électronique portable selon l'invention vise à diminuer le temps de recharge d'un accumulateur d'énergie lié à l'appareil par raccordement d'au moins un port d'entrée/sortie supplémentaire au delà du nombre de connexions à des ports d'entrée/sortie nécessaire pour un temps de rechargement donné.

Outre sa fonction première d'alimentation, le dispositif selon l'invention peut assurer la continuité vers l'appareil électronique alimenté d'au moins une liaison de données issue d'au moins un des un port d'entrée/sortie raccordés.

Avantageusement le, ou éventuellement les, moyens de raccordements concernés sont identifiables pour que l'utilisateur privilégie leur raccordement.

Une capacité d'identification aisée pourra être obtenue par tous moyens tels qu'une différence de couleur et/ou de forme des câbles et/ou les connecteurs concernés par rapport à ceux qui ne le sont pas.

Le dispositif selon l'invention à été présenté sous la forme d'une entité séparée. On ne sort pas du cadre de l'invention en intégrant le dispositif dans l'appareil électronique portable voir, éventuellement, dans un équipement source. Ce dernier offrant alors directement au moins deux moyens de raccordement de l'appareil portable à des ports d'entrée/sortie d'au moins un appareil externe susceptibles de lui fournir de l'énergie.

Certains appareil portables pouvant être alimentés par un dispositif selon l'invention ont besoin d'une puissance minimale qui excède les capacités d'alimentation d'un port d'entrée/sortie. D'autres appareils portables peuvent néanmoins offrir un premier niveau de fonctionnalité lorsqu'ils sont alimentés par un seul port d'entrée sortie selon les techniques à l'état de l'art. Dans ce cas, la présence d'un dispositif d'alimentation selon l'invention raccordé à un seul port d'entrée/sortie sera sensiblement transparente vis-à-vis dudit appareil portable qui pourra continuer d'offrir un premier niveau de fonctionnalité. Dans un tel cas, l'avantage octroyé par la présence du dispositif entre le port d'entrée sortie de l'équipement source et l'appareil électronique portable est d'offrir potentiellement la possibilité d'accéder à d'autres niveaux de services si on raccorde le dispositif à au moins un autre port d'entrée/sortie.

Le dispositif peut en outre alimenter plusieurs appareils électroniques portables ou un appareil électronique portable complété par un ou plusieurs accessoires sans sortir du cadre de l'invention. Il est également envisageable d'alimenter par le dispositif selon l'invention un autre appareil électronique portable que celui qui exploite la capacité du dispositif à assurer la continuité des circuits de transmission de données d'au moins un port d'entrée/sortie qui lui est raccordé.

D'autres avantages et caractéristiques de l'invention apparaîtront à l'examen de la description détaillée d'un mode de mise en oeuvre nullement limitatif, et des dessins annexés sur lesquels :
- la figure 1 illustre une première variante de l'invention extensible à un nombre non limité a priori de sources unitaires combinables et n'alimentant l'appareil portable que si la puissance requise est atteinte;
- la figure 2 illustre une seconde variante de l'invention optimisée pour combiner les sources d'alimentation unitaires de deux ports d'entrée/sortie et n'alimentant l'appareil portable que si la puissance requise est atteinte;
- la figure 3 illustre une troisième variante de l'invention optimisée pour combiner les sources d'alimentation unitaires de deux ports d'entrée/sortie et n'alimentant l'appareil portable que si la puissance requise est atteinte et assurant en outre une liaison de données entre le port d'entrée/sortie dit principal et l'appareil électronique portable;
- la figure 4 illustre une autre variante économique de l'invention combinant un nombre non limité a priori de sources d'alimentation unitaires venant de ports d'entrée/sortie et assurant en outre une liaison de données entre le port d'entrée/sortie dit principal et l'appareil électronique portable;
- la figure 5 illustre une autre variante encore plus économique de l'invention combinant un nombre non limité a priori de sources d'alimentation unitaires venant de ports d'entrée/sortie;
- la figure 6 illustre une autre variante très économique de l'invention combinant deux sources d'alimentation unitaires venant de ports d'entrée/sortie;

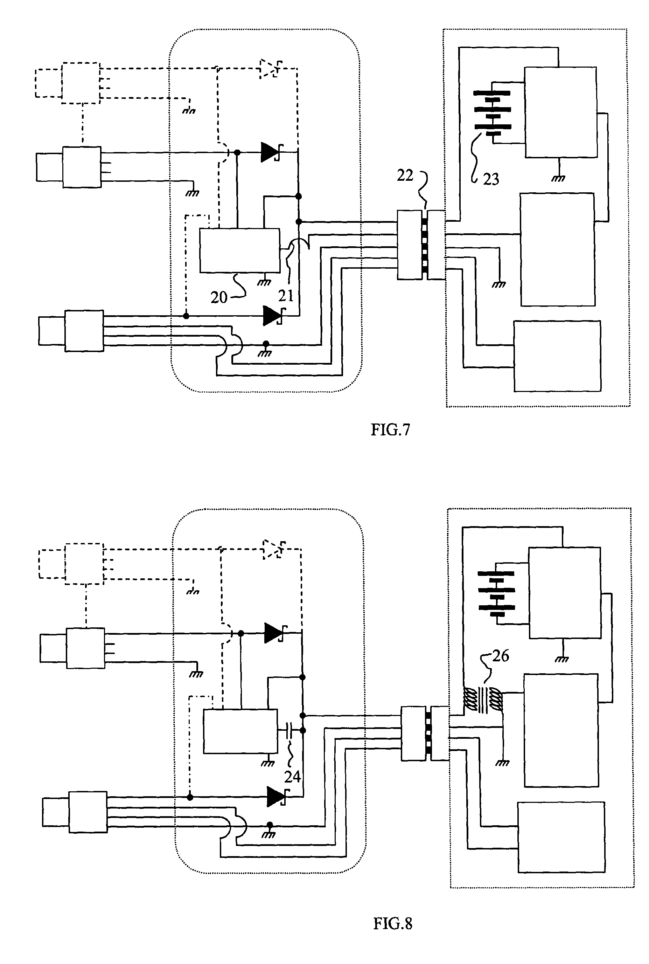

- la figure 7 illustre une autre variante de l'invention combinant un nombre non limité a priori de sources d'alimentation unitaires venant de ports d'entrée/sortie et informant par des moyens à sortie série l'appareil portable connecté de la puissance maximum effectivement disponible pour que ce dernier adapte sa consommation de manière à ne pas dépasser la puissance maximum spécifiée pour chaque port unitaire. Cette variante décrit en outre l'option assurant la continuité de la communication d'un desdits ports d'entrée/sortie, appelé par convention, port principal avec un sous-ensemble correspondant de l'appareil électronique portable;
- la figure 8 illustre une variante de l'exemple précédent dans laquelle l'information est transmise du dispositif selon l'invention à l'appareil à alimenter par courants porteurs. Cette technique permet d'utiliser le même fil à la fois pour alimenter l'appareil et pour transmettre l'information;
- la figure 9 illustre une autre variante de l'invention illustrée par la figure précédente, en ce que seule la capacité d'alimentation de chaque port d'entrée/sortie est exploitée selon l'invention et que la sortie d'alimentation combinée ainsi que l'information permettant à l'appareil alimenté d'adapter sa consommation utilise l'entrée d'alimentation externe standard de l'appareil.

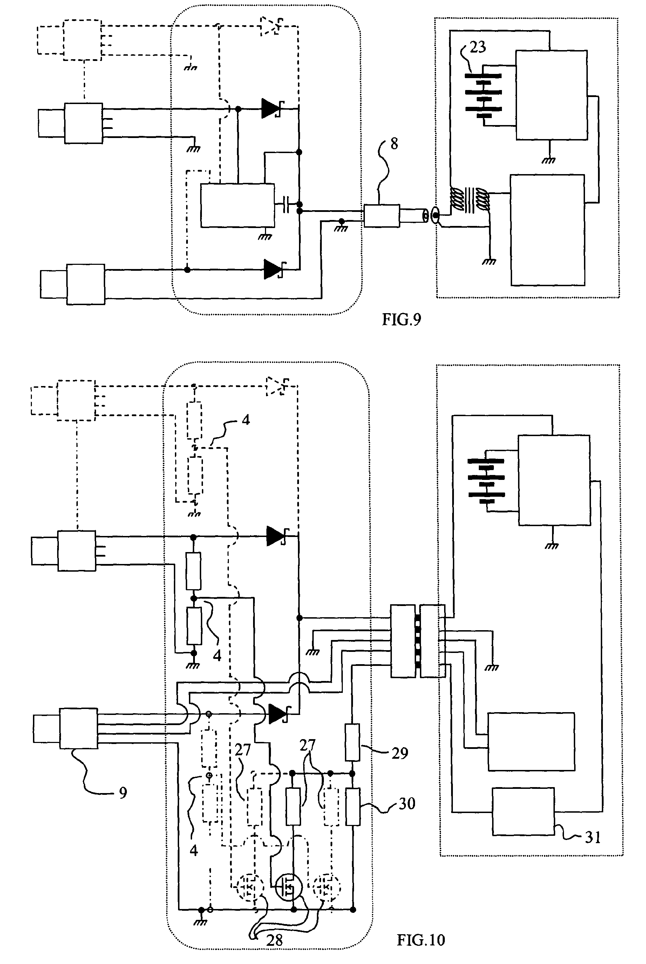

- La figure 10 illustre une autre variante de l'invention combinant un nombre non limité a priori de sources d'alimentation unitaires venant de ports d'entrée/sortie et informant par des moyens à sortie série particulièrement économiques l'appareil portable connecté de la puissance maximum effectivement disponible pour que ce dernier adapte sa consommation de manière à ne pas dépasser la puissance maximum spécifiée pour chaque port unitaire. Cette variante décrit en outre l'option assurant la continuité de la communication d'un desdits ports d'entrée/sortie, appelé par convention, port principal avec un sous-ensemble correspondant de l'appareil électronique portable;
- la figure 11 illustre une variante à faible coût de mise en oeuvre de la solution selon l'invention illustrée par la figure précédente qui est optimisée pour offrir à un appareil électronique portable une alimentation à simple ou double puissance à partir d'une connexion respectivement à un ou deux ports d'entrée/sortie ainsi qu'une liaison de données entre l'équipement auquel est raccordé ledit port principal et l'appareil électronique portable;
- la figure 12 illustre une autre variante de mise en oeuvre à faible coût du dispositif selon l'invention qui diffère des précédents en ce que l'information communiquée à l'appareil à alimenter utilise des moyens parallèles;
- la figure 13 illustre le cas d'un raccordement du dispositif selon l'invention à plusieurs ports d'un même équipement électronique.
- la figure 14 illustre le cas d'un raccordement du dispositif selon l'invention à un ou plusieurs ports de plusieurs équipements électroniques.
- la figure 15 reprend les caractéristiques de la variante illustrée par la figure précédente qui est optimisée pour un raccordement possible à deux ports d'entrée/sortie.

### Description détaillée des figures

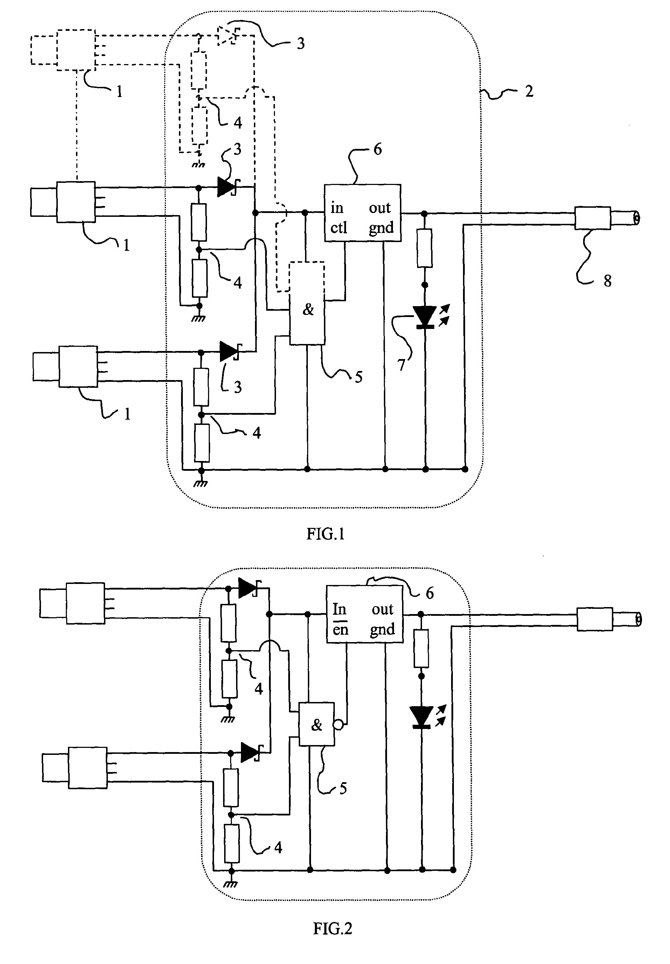

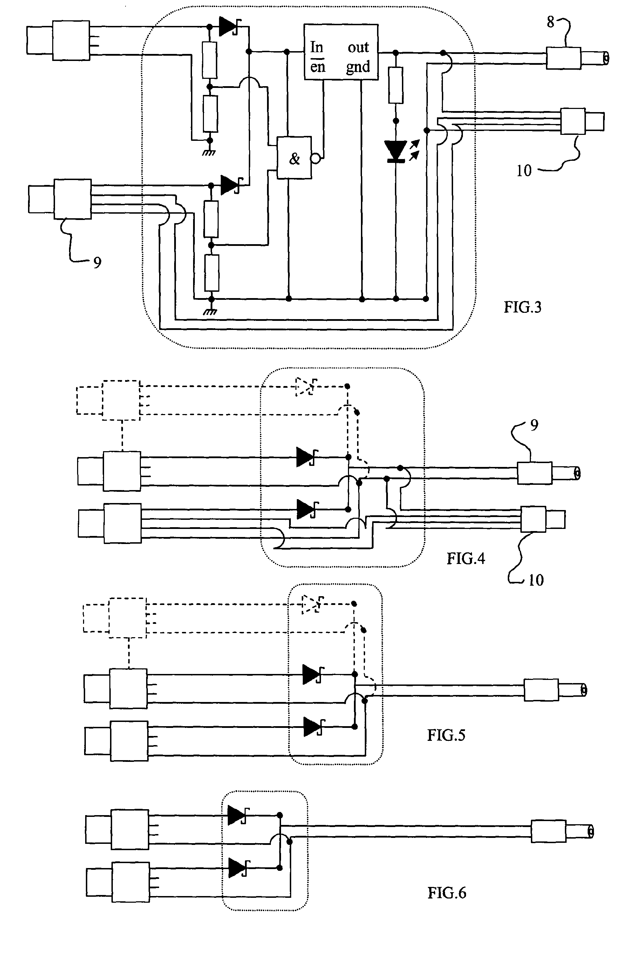

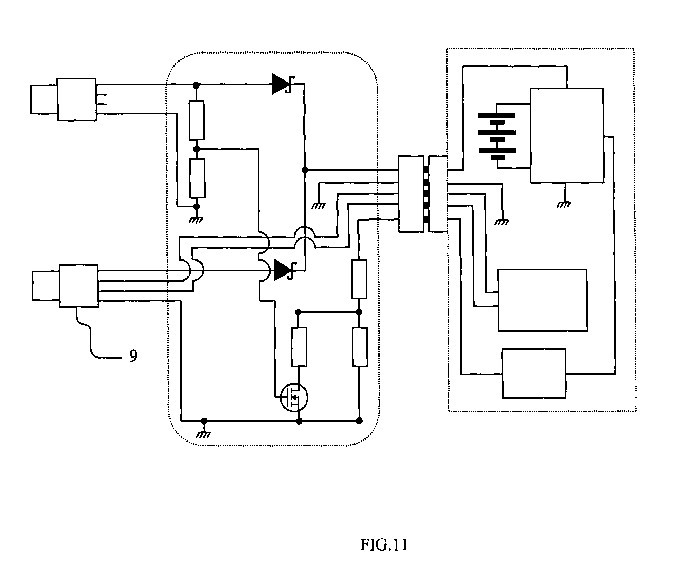

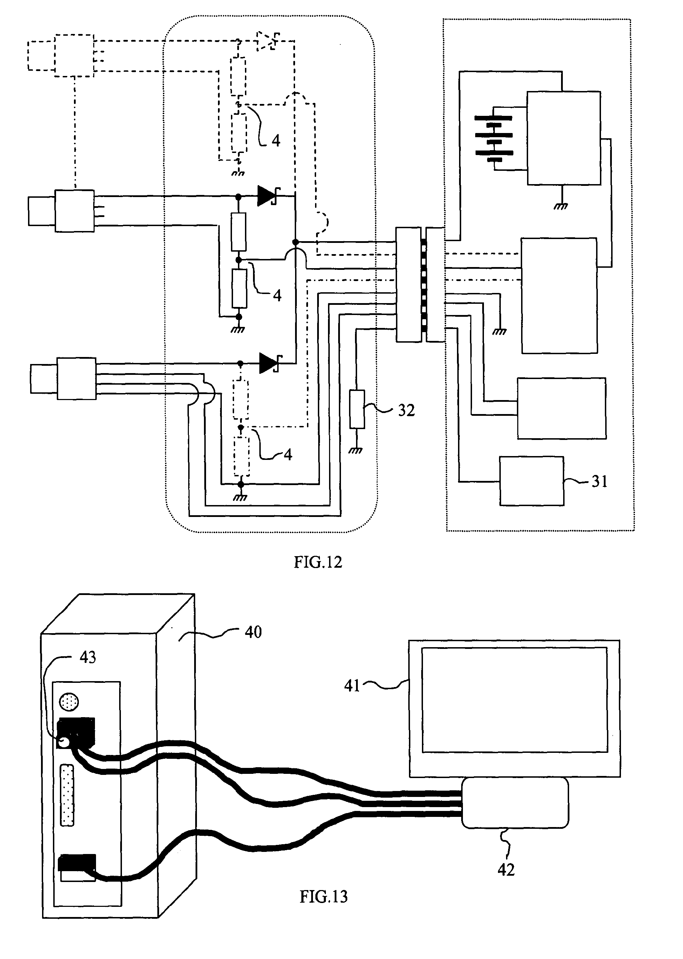

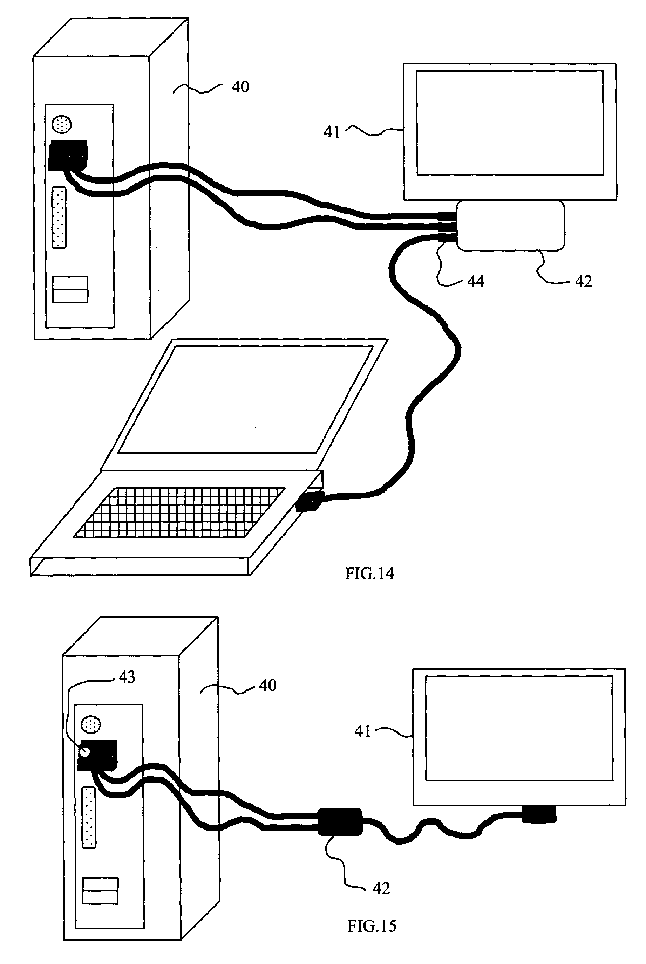

**La** **figure 1** illustre une première variante de l'invention. Des moyens de raccordement 1 pouvant être connectés à des ports d'entrée/sortie standards sur au moins un équipement électronique constituent des sources d'alimentation unitaires combinables dans le dispositif 2 selon l'invention. Le nombre des connexions unitaires n'est pas limité sur le plan théorique mais uniquement sur le plan pratique par des considérations de coût de mise en oeuvre et d'utilité. Dans cet exemple, on a fait le choix de la simplicité et de l'économie en combinant les capacités d'alimentation de ports d'entrée/sortie de même nature, par exemple des ports USB. La combinaison des puissances se fait aisément par des diodes 3, si possible à faible chute de tension directe, telles que des diodes Schottky. Cette variante non limitative du dispositif selon l'invention n'exploite que les capacités d'alimentation des ports unitaires, combinées pour alimenter un ou plusieurs appareils portables externes qui lui sont raccordés que si la puissance requise est atteinte. L'information de la présence d'une branche contribuant à un apport d'énergie se fait au moyen par exemple d'un pont diviseur 4 qui offre d'une manière économique la fixation d'un potentiel lorsque la source est déconnectée et l'adaptation de la tension fournie par le port aux caractéristiques d'entrée du circuit logique aval lorsque le port correspondant est connecté. Un sous-ensemble de contrôle 5 réalisé en logique câblée ou programmée combine de manière appropriée les informations de présence de ports issues des moyens de détection 4 pour piloter des moyens de commutation 6. Dans le cas de l'alimentation d'un appareil portable nécessitant une puissance d'alimentation minimale pour qu'il fonctionne et que si cette puissance minimale excède les capacités d'un seul port, une mise en oeuvre adaptée de l'invention prévoira le nombre approprié de connexions élémentaires. Par exemple dans le cas de ports USB, la contribution maximale de chaque port est de 500mA sous 5V soit 2,5W. Un appareil portable nécessitant une alimentation de 1A sous 5V nécessitera la connexion de deux ports USB. Le besoin d'1,5A nécessitera la combinaison des ressources de trois ports etc. Le sous-ensemble logique 5 n'activera le moyen de commutation 6 que lorsqu'au moins le nombre minimal de ports actifs nécessaires sera atteint. Un voyant lumineux 7 complètera avantageusement le dispositif pour indiquer l'état actif ou inactif de la sortie 8 du dispositif pour alimenter au moins un appareil portable.
**La** **figure 2** illustre une seconde variante de l'invention proche de celle de la figure 1 mais optimisée pour combiner les sources d'alimentation unitaires de deux ports d'entrée/sortie et n'alimentant l'appareil portable que si la puissance requise est atteinte. Cet exemple met en oeuvre des composants standards tels qu'un moyen de commutation 6 du type « high side switch » dont l'état passant est commandé par un signal à l'état logique zéro. Le sous-ensemble 5 contrôlant le moyen de commutation est matérialisé dans cet exemple par une porte « NAND » à deux entrées, chaque entrée étant raccordée à un circuit 4 pour détecter la présence d'une tension dans la branche concernée. L'alimentation de la logique de contrôle est prélevée après la combinaison pour qu'elle demeure tant qu'au moins une branche est raccordée à un port d'entrée/sortie.
**La** **figure 3** illustre une troisième variante qui diffère de la précédente en ce qu'elle exploite en outre les moyens de transmission de données d'au moins une des connexions à un port d'entrée/sortie. Dans la mesure où cette variante nécessite le raccordement de l'ensemble des connexions proposées à des ports d'entrée/sortie pour que l'alimentation vers l'appareil portable soit activée, les connexions auxdits ports n'ont pas besoin d'être différentiées entre elles en fonction du fait qu'elles exploitent ou non les moyens de transmission de données qu'elles offrent en plus de leur source d'alimentation. Par convention, on appellera connexion au port principal le raccordement à un port d'entrée/sortie exploitant les capacités de transmission dudit port en sus de la source d'alimentation qu'il représente au sens de l'invention. Dans cet exemple de mise en oeuvre, les circuits de transmissions de données de la connexion au port principal 9 sont prolongés et restitués dans un connecteur 10 permettant l'établissement d'une liaison de données avec un appareil externe. Ledit appareil externe pouvant être ou non l'appareil électronique portable alimenté par le dispositif. Dans l'exemple non-limitatif illustré, le connecteur 10 permet d'alimenter un appareil extérieur avec une puissance disponible double de ce que définit le standard correspondant, c'est-à-dire dans le cas d'un ensemble de ports USB, 5W. Des appareils standards ne peuvent exploiter directement l'accroissement de puissance disponible par le connecteur standard car cela serait une non-conformité aux spécifications. Cette difficulté peut être levée par l'ajout d'un connecteur d'alimentation 8 correspondant à l'entrée pour une alimentation externe de l'appareil. La plupart des appareils électroniques portables ayant la possibilité d'une double alimentation par un port d'entrée/sortie et par une entrée d'alimentation externe intègrent un moyen de commutation automatique qui privilégie l'alimentation externe à l'alimentation par port d'entrée/sortie lorsque la présence d'une alimentation externe est détectée. La broche d'alimentation du connecteur d'entrée/sortie 10 peut être raccordée à la source d'alimentation combinée comme illustré sur la figure, être déconnectée ou raccordée uniquement et directement à la broche d'alimentation du connecteur correspondant 8 sans sortir du cadre de l'invention.
**La** **figure 4** illustre une autre variante économique de l'invention combinant un nombre non limité a priori de sources d'alimentation unitaires venant de ports d'entrée/sortie et assurant en outre une liaison de données entre le port d'entrée/sortie dit principal et l'appareil électronique portable. Cette variante se distingue de la précédente par la suppression au sein du dispositif selon l'invention des moyens pour bloquer la fourniture d'énergie aux connecteurs 9 et/ou 10. Rien ne signale dans ce cas à l'utilisateur au sein du dispositif que le nombre nécessaire de port d'entrée/sortie pour satisfaire les besoins en puissance de l'appareil électronique raccordé n'est pas atteint. Cet inconvénient peut être compensé par des moyens présents au sein de l'appareil électronique à alimenter pour assurer la fourniture de cette information. Dans cette mise en oeuvre simplifiée, il est conseillé de connecter d'abord l'ensemble des ports d'entrée/sortie amont avant de raccorder l'appareil électronique à alimenter. Ceci pour éviter que l'appareil n'appelle un courant supérieur aux spécifications desdits ports d'entrée/sortie unitaires s'ils sont en nombre insuffisants. Cela étant les ports d'entrée/sortie modernes intègrent des dispositifs de protection tolérants aux surcharges ponctuelles et peuvent s'accommoder du non respect de la consigne de préséance.
**La** **figure 5** illustre une variante encore plus simplifiée de l'exemple précédent en ce que le dispositif selon l'invention se limite à la seule fourniture d'une alimentation par combinaison d'une pluralité d'alimentations individuelles issues de ports d'entrée/sortie.
**La** **figure 6** illustre une variante particulièrement économique de l'exemple précédent en ce qu'elle est optimisée pour un raccordement à seulement deux ports d'entrée/sortie.
**La** **figure 7** illustre une autre variante de l'invention combinant un nombre non limité a priori de sources d'alimentation unitaires venant de ports d'entrée/sortie et informant par des moyens à sortie série l'appareil portable connecté de la puissance maximum effectivement disponible pour que ce dernier adapte sa consommation de manière à ne pas dépasser pour chaque port unitaire la puissance maximum spécifiée. Cette variante décrit en outre l'option assurant la continuité de la communication d'un desdits ports d'entrée/sortie avec un sous-ensemble correspondant de l'appareil électronique portable. La capacité du dispositif selon l'invention à informer continûment l'appareil électronique portable alimenté de la puissance maximale effectivement disponible est un avantage significatif en ce qu'il permet à ce dernier d'adapter la puissance qu'il appelle pour ne jamais sortir des limites de chaque contributeur unitaire. Dans l'exemple présenté, l'information sur la puissance maximale effectivement disponible est fournie par le dispositif à l'appareil à alimenter par des moyens 20 comprenant des circuits pour détecter l'état de chaque branche et la fourniture de l'information correspondante par une liaison série 21. Ceci permet de limiter le nombre de signaux à transmettre par les connecteurs 22, de diminuer le coût de ces derniers et d'augmenter la fiabilité. L'information transmise par le dispositif peut représenter le nombre de contributeurs individuels actifs si les ports d'entrée/sortie combinés ont les mêmes caractéristiques, au moins en ce qui concerne leur capacité d'alimentation comme par exemple USB1.1 et USB2.0, et si l'appareil à alimenter connait ces caractéristiques. Dans un mode de mise en oeuvre plus sophistiqué, le dispositif selon l'invention, par la connaissance qu'il a du type des ports connectés en plus de la détection de leur état connecté ou non, peut calculer une grandeur représentative de la puissance effectivement disponible et la transmettre à l'appareil.
   Il existe de nombreux moyens pour transmettre cette information par une liaison série à l'appareil à alimenter, par exemple il peut s'agir d'une liaison de données asynchrone utilisant des UARTS, d'un signal dont la fréquence, le rapport cyclique ou encore la largeur d'impulsion porte l'information à transmettre. Selon les besoins et les caractéristiques de l'appareil portable à alimenter, la logique interne de l'appareil peut empêcher le fonctionnement si la puissance disponible est insuffisante pour fournir un premier niveau de service et attribuer prioritairement la puissance disponible en fonction de son niveau à telle ressource interne comme un accumulateur d'énergie rechargeable 23 ou à telle autre ressources fonctionnelles interne selon la nature dudit appareil portable, lecteur multimédia portable, téléphone portable, assistant numérique, dictaphone, appareil de géolocalisation, caméra numérique, appareil photo numérique, chargeur de batteries etc.
**La** **figure 8** illustre une variante de l'exemple précédent dans laquelle l'information est transmise du dispositif selon l'invention à l'appareil à alimenter par courants porteurs. Cette technique permet d'utiliser le même fil à la fois pour alimenter l'appareil et pour transmettre l'information. Dans l'exemple illustré il s'agit de la transmission d'un signal alternatif tel qu'une fréquence discrète ayant au moins une caractéristique variable selon l'information à coder, une combinaison de fréquences discrètes codant l'information ou une fréquence porteuse dont au moins une des caractéristiques est modulée selon l'information à transmettre. Il peut s'agir également d'une modulation directe de la tension ou du courant continu d'alimentation. Des moyens de couplage 24 série ou parallèle adaptés permettent de combiner le signal transportant l'information et le courant d'alimentation. Du côté de l'appareil portable le signal transportant l'information est récupéré par des moyens de couplage 26 série ou parallèle adaptés aux fréquences et aux techniques de codage et/ou de modulation employées. L'information est ensuite démodulée le cas échéant puis décodée pour être utilisée dans ledit appareil électronique portable.
**La** **figure 9** illustre une variante simplifiée de la précédente en ce que les capacités de transmission de données d'au moins un port d'entrée/sortie ne sont pas propagées par le dispositif selon l'invention de l'au moins un équipement électronique source d'énergie à l'appareil portable à alimenter. Dans ses conditions, l'alimentation peut se faire au moyen d'un simple câble bifilaire équipé d'une prise standard pour l'alimentation externe d'un appareil portable. Dans le cas d'une mise en oeuvre de l'invention pour réaliser une alimentation externe universelle, des accessoires d'adaptation permettront de répondre aux besoins de plusieurs standards de connecteurs. Un autre avantage de cette mise en oeuvre est que le dispositif d'alimentation selon l'invention est compatible avec des appareils portables à alimenter qui ne mettent pas en oeuvre l'invention sous réserve que l'utilisateur ait vérifié le nombre de connexions à des ports d'entrée/sortie unitaires correspondant aux besoins de l'appareil à alimenter. De même un appareil portable mettant en oeuvre l'invention peut aussi être alimenté par une alimentation externe ne mettant pas en oeuvre l'invention pourvu que la puissance qu'elle est capable de délivrer soit suffisante. Cela étant, même dans cette version réduite, l'appareil électronique compatible avec le dispositif d'alimentation selon l'invention, en étant capable de recevoir et d'interpréter l'information de puissance maximale disponible, peut adapter son fonctionnement automatiquement pour tirer partie au mieux des ressources disponibles. Par exemple, dans le cas d'un lecteur multimédia portable capable de fonctionner et/ou de recharger son accumulateur par une seule connexion à un seul port d'entrée/sortie et qui est informé que la puissance maximale disponible est augmentée par connexion d'au moins un autre port d'entrée/sortie pourra par exemple augmenter le courant de charge de son accumulateur interne pour diminuer sensiblement le temps de charge.
**La** **figure 10** illustre une autre variante de l'invention combinant un nombre non limité a priori de sources d'alimentation unitaires venant de ports d'entrée/sortie et informant par des moyens à sortie série particulièrement économiques l'appareil portable connecté de la puissance maximum effectivement disponible pour que ce dernier adapte sa consommation de manière à ne pas dépasser la puissance maximum spécifiée pour chaque port unitaire. Cette variante décrit en outre l'option assurant la continuité de la communication d'un desdits ports d'entrée/sortie, appelé par convention port principal, avec un sous-ensemble correspondant de l'appareil électronique portable. La communication de l'information entre le dispositif d'alimentation et l'appareil à alimenter se fait par un moyen présentant sensiblement les mêmes avantages qu'une liaison série plus élaborée en ce que la liaison repose sur une seule connexion.
   Une des techniques à l'état de l'art pour reconnaitre le type d'un accessoire raccordé à un appareil portable consiste pour ce dernier à mesurer par des moyens appropriés 31 la valeur d'une résistance dont la valeur est associée de manière biunivoque à un type d'accessoire. Généralement cette résistance a l'une de ses extrémités raccordée au potentiel commun de référence pour faire l'économie d'une deuxième connexion. Cette technique est couramment employée parce qu'elle est peu coûteuse, fiable et qu'elle convient à tous types d'accessoires dont des accessoires éventuellement passifs ou sans intelligence capable de communiquer avec l'appareil auxquels ils sont raccordés. Un des moyens pour transmettre l'information proposée dans le cadre de l'invention consiste à rendre variable la valeur de la résistance mesurée par le dispositif raccordée en fonction du nombre de ports d'entrée/sortie connectés.
   Un circuit comprenant des résistances 29, 30, 27 et des sous-ensembles de commutation 28 constitue une résistance composite. La présence d'une résistance non infinie 30 lorsqu'aucun des commutateurs n'est actif est avantageuse en ce que l'appareil peut quand même détecter et reconnaitre la présence du dispositif et en déduire si nécessaire qu'il est entièrement déconnecté de tout port d'entrée/sortie. La présence d'une résistance 29, bien que non indispensable a priori pour réaliser la fonction, offre l'avantage d'une fixation plus aisée des valeurs de la résistance composite ainsi constituée en fonction des différents états à coder. Les sous-ensembles de commutation 28 sont commandés par la présence d'une tension d'alimentation dans chaque branche au moyen de circuits appropriés 4. L'action des commutateurs ayant pour effet de mettre en parallèle, ou d'en d'autres variantes possibles en série, des résistances judicieusement déterminées pour que la valeur mesurée de ladite résistance composite puisse faire l'objet d'une correspondance biunivoque avec au moins le nombre de ports d'entrée/sortie raccordés. Bien entendu, on ne sort pas du cadre de l'invention en fournissant à l'appareil électronique portable une tension variable à mesurer à la place d'une valeur de résistance. Dans une variante de mise en oeuvre assurant la continuité des moyens de transmission entre un port d'entrée/sortie et l'appareil à alimenter, il est possible de supprimer les composants associés à la détection de présence du port correspondant car l'appareil détectant l'établissement de la liaison de donnée peut en déduire que la contribution correspondante à l'alimentation est présente.
**La** **figure 11** illustre une version à faible coût de mise en oeuvre de la variante précédente qui est optimisée dans le cadre d'un raccordement à deux ports d'entrée/sortie. La plupart des composants non indispensables ont été retirés, en particulier ceux qui sont associés audit port principal dont la continuité des circuits de transmission de données vers l'appareil à alimenter est assurée.
**La** **figure 12** illustre une autre variante de mise en oeuvre de l'invention dans laquelle l'information liée à la détection de l'état connecté ou non des ports est transmise à l'appareil à alimenter à faible coût du dispositif selon l'invention qui diffère des précédents en ce que l'information communiquée à l'appareil à alimenter utilise des moyens parallèles comme par exemple la continuité des fils issus des moyens de détection de présence 4 des contributeurs individuels. Des moyens 31 pour détecter le type d'accessoire en fonction de la valeur d'une résistance 32 peuvent avantageusement être ajoutés.
**La** **figure 13** illustre le cas d'un raccordement du dispositif selon l'invention à plusieurs ports d'un même équipement électronique 40. Dans cet exemple non limitatif, l'invention est mise en oeuvre sous la forme d'un dispositif monobloc 42 directement connectable à l'appareil électronique à alimenter 41 par l'intermédiaire de contacts solidaires d'une paroi du boîtier. De manière avantageuse, le dispositif 42 assure en outre la continuité de la liaison de données entre un des ports d'entrée/sortie de l'équipement électronique. Pour plus de commodité et pour signaler à l'utilisateur le câble à raccorder sur le port dit principal, c'est-à-dire celui dont la continuation des circuits de transmission de données vers l'appareil portable est assurée par le dispositif selon l'invention, le câble et/ou son ou le cas échéant ses connecteurs d'extrémité sont repérés 43 par une forme et/ou une couleur en tout ou partie différente des autres câbles et/ou connecteurs. En particulier, si temporairement ou durablement une seule connexion à un port d'entrée/sortie n'est possible et que l'appareil ou les appareils raccordés le tolèrent alors il est avantageux que l'utilisateur choisisse de raccorder le câble associé audit port principal.
**La** **figure 14** illustre le cas d'un raccordement du dispositif selon l'invention à un ou plusieurs ports de plusieurs équipements électroniques. Dans cet exemple, le dispositif 42 est raccordable à au moins un port d'entrée/sortie par des câbles déconnectables aussi au niveau du dispositif. Il est bien entendu possible également de rendre déconnectable au niveau du dispositif, seulement une partie des câbles par exemple les câbles optionnels, le ou les câbles permettant l'établissement d'au moins une liaison de données pouvant être raccordés de manière non détachable.
**La** **figure 15** reprend les caractéristiques de la variante illustrée par la figure précédente qui est optimisée pour un raccordement possible à deux ports d'entrée/sortie d'un ou plusieurs équipements source 40 à un appareil portable 41. Cet exemple illustre une mise en oeuvre de l'invention sous la forme d'un accessoire 42 de type « pieuvre » dans lequel l'électronique surmoulée est raccordée à une pluralité de câbles terminés par des connecteurs. Le connecteur et/ou le câble assurant la continuité des circuits de transmission de données entre l'équipement 40 et l'appareil 41 sera avantageusement pourvu de moyens 43 pour le différencier.

Bien sûr, l'invention n'est pas limitée aux exemples qui viennent d'être décrits, de nombreux aménagements peuvent y être apportés, d'autres choix de combinaisons de caractéristiques et/ou de mise en oeuvre peuvent être faits sans sortir du cadre de l'invention. En outre, les exemples de solutions ou de standards techniques cités sont ceux qui sont en vigueur au moment du dépôt de la demande brevet. Ils sont susceptibles de disparaitre ou d'être rapidement remplacés par d'autres sans pour autant rendre obsolète l'invention elle même.

## Revendications

1. Dispositif 42 pour alimenter un appareil électronique portable 41 **caractérisé par le fait que** la puissance nécessaire pour alimenter l'appareil est obtenue par la combinaison d'une pluralité de connexions 1 à des ports d'entrée/sortie incluant chacun la fourniture d'une alimentation dont la puissance unitaire spécifiée est inférieure au besoin maximal de l'appareil électronique raccordé.

2. Dispositif selon la revendication 1 **caractérisé par le fait que** l'alimentation qu'il fournit à l'appareil électronique portable recharge en outre un moyen d'accumulation d'énergie 23.

3. Dispositif selon l'une quelconque des revendications précédentes **caractérisé par le fait que** l'énergie fournie par chaque port d'entrée/sortie est issue d'une source commune.

4. Dispositif selon l'une quelconque des revendications précédentes **caractérisé par le fait que** les ports d'entrée/sortie combinés par le dispositif sont tous de type analogue.

5. Dispositif selon l'une quelconque des revendications précédentes **caractérisé par le fait qu'**il comprend des moyens de limitation et/ou de régulation et/ou de conversion pour harmoniser les contributions d'au moins un des ports d'entrée/sortie avant combinaison.

6. Dispositif selon l'une quelconque des revendications précédentes **caractérisé par le fait que** les moyens assurant la combinaison des alimentations fournies par chaque port d'entrée/sortie incluent des moyens 3 pour bloquer la circulation d'un courant entre les ports combinés.

7. Dispositif selon l'une quelconque des revendications précédentes **caractérisé par** la présence d'un commutateur 6 commandé de manière conditionnelle n'autorisant la circulation d'un courant vers l'appareil électronique raccordé au dispositif que si suffisamment de connexions à des ports d'entrée/sortie sont réalisées pour pouvoir fournir une puissance maximale prédéterminée sans que la contribution de chaque port d'entrée/sortie n'excède la puissance maximale spécifiée.

8. Dispositif selon l'une quelconque des revendications précédentes **caractérisé par le fait que** le dispositif selon l'invention fournit à l'appareil électronique raccordé une information représentative de la puissance combinée maximale pouvant être fournie.

9. Dispositif selon la revendication 8 **caractérisé en ce que** ladite information est fournie par des moyens séparés de ceux fournissant l'alimentation.

10. Dispositif selon la revendication 8 **caractérisé en ce que** ladite information est fournie par des moyens combinés avec ceux fournissant l'alimentation.

11. Dispositif selon la revendication 10 **caractérisé en ce que** ladite information est fournie par les mêmes circuits au sein du même connecteur que celui dédié à l'alimentation.

12. Dispositif selon la revendication 10 **caractérisé en ce que** ladite information est fournie par les mêmes inducteurs que ceux dédiés à l'alimentation.

13. Dispositif selon l'une quelconque des revendications précédentes **caractérisé par le fait qu'**il assure en outre la continuité vers l'appareil électronique alimenté d'au moins une liaison de données issue d'au moins un des ports d'entrée/sortie raccordés.

14. Dispositif selon la revendication 13 **caractérisé par le fait que** l'au moins un port d'entrée/sortie dont la continuité d'au moins une liaison de données peut être directement ou indirectement identifié par des moyens faisant appel au sens de la vue et/ou du toucher.

15. Système pour adapter la puissance absorbée par un appareil électronique portable en fonction de la puissance maximale que peut fournir un dispositif qui l'alimente par combinaison d'une pluralité de connexions à des ports d'entrée/sortie comprenant :
- Un dispositif, pour alimenter un appareil électronique portable par combinaison d'une pluralité d'alimentations unitaires issues de ports d'entrée/sortie d'au moins un autre équipement électronique, agencé pour fournir en outre une information représentative de la puissance maximale pouvant être fournie sans que les dites alimentations unitaires ne dépassent leur puissance maximale spécifiée.
- Un appareil électronique portable capable d'interpréter tout ou partie de ladite information fournie par le dispositif qui l'alimente pour adapter la puissance qu'il absorbe pour ne pas dépasser la puissance maximale combinée pouvant être fournie.

16. Système selon la revendication 15 comprenant en outre des moyens pour adapter les conditions de recharge d'au moins un accumulateur d'énergie lié à l'appareil électronique portable en fonction de ladite information.

17. Procédé d'adaptation de la puissance absorbée par un appareil électronique portable en fonction de la puissance maximale que peut fournir un dispositif qui l'alimente par combinaison d'une pluralité de connexions à des ports d'entrée/sortie comprenant :
- Une étape de détection directe ou indirecte des puissances unitaires maximales combinables selon l'invention,
- Une étape de transmission à l'appareil à alimenter d'une information en relation avec la détection de la première étape,
- Une étape d'adaptation, au sein de l'appareil portable alimenté, de la puissance maximale absorbée en fonction de ladite information.

18. Application du procédé d'adaptation de la puissance absorbée par un appareil selon la revendication 17 pour diminuer le temps de recharge d'un accumulateur d'énergie lié à un appareil électronique portable par raccordement d'au moins un port d'entrée/sortie supplémentaire au delà du nombre de connexions à des ports d'entrée/sortie nécessaire pour un temps de rechargement donné.
